(19) Europäisches Patentamt
European Patent Office
Office européen des brevets

(11) **EP 4 708 372 A1**

(12) **EUROPEAN PATENT APPLICATION**
published in accordance with Art. 153(4) EPC

(43) Date of publication:
**11.03.2026 Bulletin 2026/11**

(21) Application number: **24880226.6**

(22) Date of filing: **10.10.2024**

(51) International Patent Classification (IPC):
**H01M 4/04** *(2006.01)*    **H01M 10/04** *(2006.01)*
**B65H 43/04** *(2006.01)*    **B65H 23/182** *(2006.01)*
**G05B 19/418** *(2006.01)*

(52) Cooperative Patent Classification (CPC):
**B65H 23/182; B65H 43/04; G05B 19/418;**
**H01M 4/04; H01M 10/04;** Y02E 60/10

(86) International application number:
**PCT/KR2024/096244**

(87) International publication number:
**WO 2025/084890 (24.04.2025 Gazette 2025/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.10.2023 KR 20230137548**

(71) Applicant: **LG Energy Solution, Ltd.
Seoul 07335 (KR)**

(72) Inventors:
• **LEE, Hyung Kwan**
**Daejeon 34122 (KR)**
• **KIM, Min Su**
**Daejeon 34122 (KR)**
• **CHOI, Ee Beom**
**Daejeon 34122 (KR)**

(74) Representative: **BCKIP Part mbB
MK1
Landsbergerstraße 98, 3.Stock
80339 München (DE)**

(54) **SECONDARY BATTERY MANUFACTURING SYSTEM AND SECONDARY BATTERY MANUFACTURING METHOD**

(57)    Example embodiments of the present technology provide a battery cell formation device. The apparatus includes: a driving part including a driving plate and driving rods configured to move the driving plate in a first direction; and a support part including a support plate and elastic elements connected to the support plate, in which the support plate is spaced apart from the driving plate in the first direction and includes steps protruding in the first direction.

[FIG. 1]

EP 4 708 372 A1

**Description**

[Technical Field]

The present invention relates to a secondary battery manufacturing system and a secondary battery manufacturing method. The present application claims the benefit of priority based on Korean Patent Application No. 10-2023-0137548, filed on October 16, 2023, and the entire contents of the Korean patent application is incorporated herein by reference.

[Background Art]

Secondary batteries can be charged and discharged a plurality of times unlike primary batteries. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.
A secondary battery is manufactured by an electrode process, an assembly process, and an activation process. Among these processes, the electrode process is a key process in determining the yield and performance of battery cells. The electrode process may include a coating process, a roll press process, and a slitting process. In the coating process, an active material and an insulating material may be applied to a surface of a current collector. In the roll press process, an electrode may be pressed by pressing rolls. In the roll press process, a density, performance and surface quality of the electrode may be determined. In the slitting process, the electrode may be cut into a plurality of electrodes according to the design of battery cells.

[Disclosure]

[Technical Problem]

The present invention is directed to providing a secondary battery manufacturing system configured to generate and use a roll map including information about quality and defects in an electrode manufacturing process.

[Technical Solution]

Embodiments of the present invention provide a secondary battery manufacturing system. The secondary battery manufacturing system includes a first encoder configured to sense a length of an electrode sheet unwound from a first electrode roll by an unwinder to generate an exhaustion amount signal, a first controller configured to collect input amount data of the electrode sheet, based on the exhaustion amount signal; and a server configured to store the input amount data.
The server may be further configured to determine an inter-process loss, based on the input amount data, and the inter-process loss may be a loss of the first electrode roll that occurs after the first electrode is completed and before the first electrode roll is loaded on the unwinder.
The inter-process loss may be a loss due to sample inspection.
The inter-process loss may be a loss due to scrapping of an outermost part of the first electrode roll.
The secondary battery manufacturing system may further include a scrap port configured to scrap a defective part of the electrode sheet unwound from the first electrode roll, and the first controller may be further configured to collect scrap data indicating a length of a part of the electrode sheet that is scrapped by the scrap port.
The first controller may be further configured to transmit the scrap data to the server.
The server may be further configured to store a roll map including defect position data indicating a position of a defect on the first electrode roll.
The secondary battery manufacturing system may further include a second controller configured to control the unwinder, and the server may be further configured to transmit the defect position data to the second controller.
The server may be further configured to compare the defect position data with the scrap data.
The server may be further configured to transmit a hold command to the second controller, when a length of the defect in the defect position data is greater than a length of the scrapped part of the electrode sheet.
The second controller may be configured to control the unwinder, based on the hold command.
Example embodiments provide a secondary battery manufacturing method. The secondary battery manufacturing method includes collecting scrap data indicating a length of a scrapped part of an electrode sheet, and comparing the length of the scrapped part of the electrode sheet with a length of a defect of the electrode sheet, in which the scrap data is collected based on an input amount signal generated by a first encoder configured to sense a length of the electrode sheet unwound from a first electrode roll.

The secondary battery manufacturing method may further include stopping unwinding of the first electrode roll, when the length of the defect is greater than the length of the scrapped part of the electrode sheet.

[Advantageous Effects]

Example embodiments of the present invention provide a system for generating a roll map that enables feedback, feedforward, and tracking of an electrode process.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

[Brief Description of the Drawings]

FIG. 1 illustrates a secondary battery manufacturing system according to example embodiments.
FIG. 2 is a flowchart of a secondary battery manufacturing method according to example embodiments.
FIGS. 3 and 4 illustrate a part of an electrode sheet.
FIG. 5 illustrates a secondary battery manufacturing system according to example embodiments.

[Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

(First Embodiment)

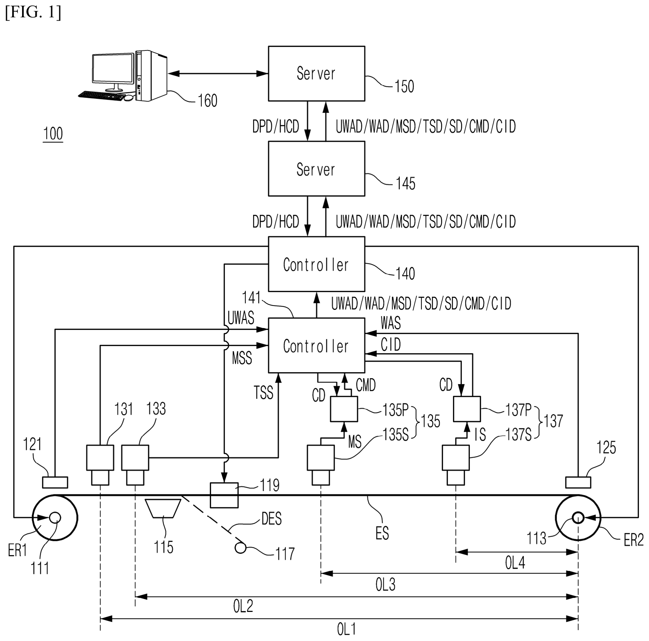

FIG. 1 illustrates a secondary battery manufacturing system 100 according to example embodiments.

Referring to FIG. 1, the secondary battery manufacturing system 100 may include an unwinder 111, a rewinder 113, a splicing table 115, a scrap port 117, a processing device 119, a first encoder 121, a second encoder 123, a first sensor 131, a second sensor 133, a measuring device 135, an inspector 137, a controller 141, a controller 143, a server 145, a server 150, and a client device 160.

The secondary battery manufacturing system 100 may be configured to generate a roll map including data about an electrode sheet ES. The roll map may represent the electrode sheet ES based on coordinates indicating positions on the electrode sheet ES. A secondary battery manufacturing process may be performed on the electrode sheet ES as described below. The roll map may include data that represents a history of processes performed on the electrode sheet ES and relates to coordinates. Accordingly, the roll map enables feedback, feedforward, and tracking of a secondary battery manufacturing process as described below.

A first electrode roll ER1 on which a previous process has been performed may be loaded on the unwinder 111. The unwinder 111 may be configured to unwind the electrode sheet ES from the first electrode roll ER1. The rewinder 113 may be configured to wind the electrode sheet ES into a second electrode roll ER2. The electrode sheet ES may be wound into the second electrode roll ER2 and be cut and separated after a certain winding length is reached. Accordingly, the electrode sheet ES may be moved between the unwinder 111 and the rewinder 113.

Roll maps may be produced in units of lots. A lot is a production unit of the roll-to-roll process, and the second electrode roll ER2 separated to be exported after a target winding amount is reached is an example of the lot. The first electrode roll ER1 newly loaded on the unwinder 111 is also an example of the lot. Accordingly, the server 150 may store a first roll map of the previous process. The first roll map may correspond to the first electrode roll ER1. In addition, the server 150 may generate and store a second roll map of a current process. The second roll map may correspond to the second electrode roll ER2.

A process of manufacturing a secondary battery (e.g., an electrode process) may be performed on the electrode sheet ES. The electrode process is performed on the electrode sheet ES unwound from the first electrode roll ER1 and wound into the second electrode roll ER2 and thus may be referred to as a roll-to-roll process.

In the roll map, time series data constructed over time (i.e., according to the progress of the process) may be related to coordinate data CD based on the amount of movement of the electrode sheet ES.

The manufacture of a secondary battery involves a series of different processes, and a leading process affects the following process. In this case, it is difficult to reflect time series data of the leading process in the following process when the time series data of the leading process does not directly match a workpiece, an intermediate product, and a product of the real world. Hereinafter, correcting the following process on the basis of data generated according to a result of the leading process will be referred to as feedforward.

Here, the workpiece is an article provided as a result of each process, e.g., the electrode sheet ES of FIG. 1 on which the coating process, the roll pressing process, and the slitting process are performed. The intermediate product may be one of separators cut by the notching process, electrodes cut by the notching process, and an assembly thereof. The intermediate product may be a structure including a housing and an electrode assembly included in the housing (in some cases, the structure further includes an electrolyte). The product is an article processed by the activation process to be operable as a secondary battery. The above-described definitions of the workpiece, the intermediate product, and the product are definitions thereof only in one aspect and thus should not be understood as excluding general definitions thereof.

An electrode process of a secondary battery includes a series of roll-to-roll processes. For feedforward, time series data should be related to positions on workpieces, components, intermediate products, and products of the real world. Here, the feedforward may include controlling a process for the electrode sheet ES unwound from the first electrode roll ES1, based on the roll map of the first electrode roll ES1 produced in the previous process. The roll map may allow the time series data to be related with coordinate data including coordinates of the positions on workpieces, the components, the intermediate products, and the products of the real-world. The roll map may provide matching between the time series data and the workpieces, the components, the intermediate products, and the products of the real world, based on the coordinate data. Accordingly, the generation of the roll map and feed forwarding based on the roll map may improve the efficiency of production and quality by digitizing and objectifying aspects of a process that depend on an operator's discretion.

A roll map of a preceding lot may be used to improve a process of a following lot, and this operation may be referred to as process feedback. The process feedback using the roll maps may include identifying process conditions and process parameters that cause a problem and a defect, based on data included in the roll maps. For example, the second roll map of the second electrode roll ER2 with wound electrode sheet ES processed in the current process may be generated, and processing of a subsequent lot may be controlled based on the second roll map.

Furthermore, as described below, the roll maps may be cumulatively generated for workpieces, intermediate products, and products of unit processes to track process history of products (e.g., battery cells, battery modules, or battery packs) on the market. For example, the battery cell may include a cell identifier ID on an electrode assembly or a case. The cell ID may include lot numbers and coordinate information of electrodes and a separator included in the battery cell. In other words, the cell ID may be related to a roll map of the electrodes and the separator included in the battery cell. Accordingly, when an event, e.g., a quality issue, occurs in the battery cell on the market, historic data of the manufacture of the battery cell may be retrieved based on the cell ID.

The first encoder 121 may be configured to sense an amount of the electrode sheet ES unwound from the first electrode roll ER1 by the unwinder 111. Accordingly, the first encoder 121 may be configured to generate an unwinding signal UWAS indicating a length of the electrode sheet ES unwound by the unwinder 111. The first encoder 121 may be configured to transmit the unwinding signal UWAS1 to the controller 141. The controller 141 may be configured to collect exhaustion amount data UWAD, based on the unwinding signal UWAS of the electrode sheet ES.

The second encoder 123 may be configured to sense an amount of the electrode sheet ES wound onto the second electrode roll ER2 by the rewinder 113. Accordingly, the second encoder 123 may be configured to generate a winding signal WAS indicating a length of the electrode sheet ES wound by the rewinder 113. The second encoder 123 may be configured to transmit the winding signal WAS to the controller 141. The controller 141 may be configured to collect good-quality-product amount data UWAD, based on the unwinding signal UWAS of the electrode sheet ES.

A defective part DES of the electrode sheet ES may be scrapped as described below. Accordingly, a length of the electrode sheet ES wound by the unwinder 111 may be different from that of the electrode sheet ES wound by the rewinder 113. When the electrode sheet ES is stretched due to pressure of pressing rolls in the roll press process, a length of the electrode sheet ES wound by the unwinder 111 may be different from an amount of the electrode sheet ES wound by the rewinder 113.

The controller 141 may be configured to collect the coordinate data CD of the electrode sheet ES, based on one of the winding WAS and the unwinding signal UWAS of the electrode sheet ES. As another example, the controller 141 may determine a moving distance of the electrode sheet ES based on an exhaustion amount signal WAS of the electrode sheet ES and thus may be configured to determine a position of a part of the electrode sheet ES to be wound by the rewinder 113 on the electrode sheet ES at each point in time when a process is performed by the processing device 119. Hereinafter, the technical idea of the present invention will be described with respect to an embodiment in which the controller 141 collects the coordinate data CD based on the exhaustion amount signal WAS of the electrode sheet ES.

The coordinate data CD may include coordinates matching parts of the electrode sheet ES. That is, arbitrary points on the electrode sheet ES may match the coordinates. The coordinates may be one-dimensional (1D) quantities in a longitudinal direction of the electrode sheet ES but is not limited thereto. The coordinates may be two-dimensional (2D) quantities in the longitudinal direction of the electrode sheet ES and a width direction of the electrode sheet ES.

The first sensor 131 may be configured to sense an NG mark on the electrode sheet ES. The NG mark may be formed by, for example, an inkjet printer or the like, and include information about the position and type of a defect. As a non-limiting example, the first sensor 131 may include a vision machine or an OCR reader. The first sensor 131 may be configured to generate an NG mark sensing signal MSS. The first sensor 131 may be configured to transmit the NG mark sensing signal MSS to the controller 141. The controller 141 may be configured to collect NG mark sensing data MSD based on the NG mark sensing signal MSS. The controller 141 may be configured to collect the NG mark sensing data MSD by relating the NG mark sensing signal MSS with the coordinate data CD. The NG mark sensing data MSD may include, for example, a defect value indicating the presence and aspect of a defect, and a coordinate matching the defect value.

To collect the NG mark sensing data MSD, the coordinate data CD may be calibrated based on an offset length OL1. The calibrating of the coordinate data CD should be understood as compensating for the difference between a part of the electrode sheet ES sensed by the second encoder 123, i.e., a part of the electrode sheet ES wound by the unwinder 111, and a part of the electrode sheet ES sensed by the first sensor 131. According to example embodiments, the controller 141 may calibrate coordinate data CD collected at the same time as the NG mark sensing signal MSS, based on the offset length OL1, and relate the calibrated coordinate data with the NG mark sensing signal MSS to collect the NG mark sensing data MSD.

The offset length OL1 is a length of the electrode sheet ES between the first sensor 131 and the rewinder 113 according to a moving path of the electrode sheet ES. The offset length OL1 may be equal to or greater than a straight line distance between the first sensor 131 and the rewinder 113.

The second sensor 133 may be configured to sense an NG tag on the electrode sheet ES. The second sensor 133 The NG tag may be attached to the electrode sheet ES by an operator or an NG tag attacher. The NG tag may indicate a position of a defect of the electrode sheet ES. As a non-limiting example, the second sensor 133 may be a color sensor. The second sensor 133 may be configured to generate an NG tag sensing signal TSS. The second sensor 133 may be configured to transmit the NG tag sensing signal TSS to the controller 141.

The controller 141 may be configured to collect NG tag sensing data TSD, based on the NG tag sensing signal TSS. The controller 141 may be configured to collect the NG tag sensing data TSD by relating the NG tag sensing signal TSS with the coordinate data CD. The NG tag sensing data TSD may include, for example, a defect value indicating the presence and aspect of a defect, and a coordinate matching the defect value.

To collect the NG tag sensing data TSD, the coordinate data CD may be calibrated based on an offset length OL2. The offset length OL2 is a length of the electrode sheet ES between the second sensor 133 and the rewinder 113 according to a moving path of the electrode sheet ES. The offset length OL2 may be equal to or greater than a straight line distance between the second sensor 133 and the rewinder 113. The calibration of the coordinate data CD performed based on the offset length OL2 is substantially the same as that performed based on the offset length OL1 and thus redundant description thereof is omitted here.

Each of the first and second sensors 131 and 133 may be referred simply to as a sensor. The NG tag sensing signal TSS and the NG mark sensing signal MSS may be referred simply to as an NG sensing signal. The NG mark sensing data MSD and the NG tag sensing data TSD may be referred simply to NG sensing data.

The controller 143 may be configured to control operations of the unwinder 111, the rewinder 113, the scrap port 117, and the processing device 119. The controller 143 may be configured to generate a signal for operating or stopping the unwinder 111, the rewinder 113, the scrap port 117 and the processing device 119. The signal for operating or stopping the unwinder 111, the rewinder 113, the scrap port 117, and the processing device 119 may be generated based on a body including a product ID and details of a manufacturing recipe.

The controller 143 may receive the NG mark sensing data MSD and the NG tag sensing data TSD from the controller 141. The controller 143 may be configured to generate the signal for operating or stopping the unwinder 111, the rewinder 113, the scrap port 117, and the processing device 119, based on the NG mark sensing data MSD and the NG tag sensing data TSD.

The controller 143 may be configured to generate the signal for operating or stopping the unwinder 111, the rewinder 113, the scrap port 117, and the processing device 119, based on defect position data DPD. Here, the defect position data DPD may indicate a position of a defect on the first electrode roll ER1. The defect position data DPD may be included in the first roll map of the first electrode roll ER1. The server 150 may be configured to transmit the defect position data DPD to the controller 143. The defect position data DPD may be loaded to the controller 143 via the server 145.

The controller 143 may decrease a moving speed of the electrode sheet ES or stop winding and unwinding performed by the unwinder 111 and the rewinder 113, when a defect on the electrode sheet ES identified by the defect position data DPD, the NG mark sensing data MSD, or the NG tag sensing data TDS approaches the splicing table 115.

After a start point of the defect (or a point adjacent to the start point of the defect when a process margin is considered) is cut on the splicing table 115, the scrap port 117 may be configured to wind the defective part DES of the electrode sheet ES as indicated by a thick dashed line. The defective part DE wound by the scrap port 117 may be scrapped. After the defective part DES of the electrode sheet ES is sufficiently wound by the scrap port 117, a part of the electrode sheet ES connected to the scrap port 117 and a part of the electrode sheet ES connected to the unwinder 111 may be separated from each other. Next, a current process may be continued by connecting the part of the electrode sheet ES connected to the unwinder 111 and a part of the electrode sheet ES connected to the rewinder 113. The part of the electrode sheet ES connected to the unwinder 111 and the part of the electrode sheet ES connected to the rewinder 113 may be connected on the splicing table 115.

The processing device 119 may be located downstream of the flow of the electrode sheet ES, compared to the splicing table 115. That is, the processing device 119 may be configured to process the electrode sheet ES from which a defect is scrapped by processing on the splicing table 115.

For example, the processing device 119 may include a coater, and the electrode sheet ES may be coated with an electrode slurry. As another example, the processing device 119 may include a pressing roll, and the roll pressing process may be performed on the electrode sheet ES coated with the electrode slurry. As another example, the processing device 115 may include a slitting knife, and the electrode sheet ES may be divided into a plurality of electrode sheets.

The coating process is a process of applying a coating material such as the electrode slurry to the electrode sheet ES. The electrode slurry may include an electrode active material, a conductive agent, a binder, and a solvent. The electrode slurry may be provided by dissolving the electrode active material, the conductive additive, the binder, etc. in the solvent.

The roll pressing process is a process of passing the electrode sheet ES coated with the electrode slurry between pressing rolls facing each other. By using the pressing rolls, a surface of an electrode may be planarized and a bonding force between the active material and a current collector may be increased.

The coating process and the roll pressing process are performed on the electrode sheet ES having a broad width to enhance the production (e.g., GWh) per line of secondary battery production equipment. Thereafter, in the slitting process, the electrode sheet ES having a broad width may be cut according to the specifications of a battery cell.

The measuring device 135 may be configured to measure the electrode sheet ES to collect measurement data of the electrode sheet ES. The measuring device 135 may measure the electrode sheet ES by a scanning method. While scanning is performed by the measuring device 135, the measuring device 135 may move in a width direction of the electrode sheet ES. While the measuring device 135 performs scanning in the width direction, the electrode sheet ES may be moved in the longitudinal direction by the unwinder 111 and the rewinder 113.

The measurement data may be collected based on inspection performed by scanning (e.g., scanning the electrode sheet ES in the transverse direction). Accordingly, measurement data generated by performing scanning once may include a plurality of measurement values expressed numerically. For example, the measurement data may include thickness data, data of loading of the coating material on the electrode sheet ES, etc. Here, the loading of the coating material is the amount of the coating material loaded per unit area of the electrode sheet ES, and may be an area density of the coating material. Whether a measured part of the electrode sheet ES is defective or not may be determined by processing the measurement data by a set method. When an amount of the measured coating material on the electrode sheet ES (e.g., the loading of the coating material on the electrode sheet ES or a thickness of the electrode sheet ES) is in a set range including upper and lower limits, a corresponding part of the electrode sheet ES may be determined as a good-quality part. The corresponding part of the electrode sheet ES may be determined as defective, when the amount of the measured coating material on the electrode sheet ES (e.g., the loading of the coating material on the electrode sheet ES or the thickness of the electrode sheet ES) is less than the lower limit or greater than the upper limit.

The measuring device 135 may include the sensing part 135S and a processor 135P. The sensing part 135S may be configured to sense a physical quantity of the electrode sheet ES to generate a measurement signal MS. For example, the sensing part 135S may include a time delay and integration (TDI) camera, a complementary metal oxide semiconductor (CMOS) image sensor, a time-of-flight (TOF) sensor, etc. The sensing part 135S may include an emitter and a receiver that are configured to perform measurement using a non-destructive signal such as ultrasound waves, microwaves, terahertz waves, or infrared rays. The sensing part 135S may include analog and/or digital sensors, such as a biosensor, a chemical sensor, a composition sensor, a current and/or power meter, an air quality sensor, a gas sensor, a hall effect sensor, a brightness level sensor, and an optical sensor. The measuring device 135 may include a pressure sensor, a temperature sensor, an ultrasonic sensor, a proximity sensor, a door state sensor, a motion tracking sensor, a humidity sensor, a visible light and infrared sensor, a camera, etc.

Hereinafter, the technical idea of the present invention will be described with respect to, as a non-limiting example, an embodiment in which the measuring device 135 is a loading gauge (e.g., a web gauge of Thermofisher Scientific) configured to measure an amount of a coating layer loaded on the electrode sheet ES and an embodiment in which the measuring device 135 is thickness gauge configured to measure a thickness of a sheet material SM. Based on the above descriptin, those of ordinary skill in the art will be able to easily derive an embodiment in which a measuring device includes one of the above-described sensors and is configured to sense one of the above-described measured amounts.

The processor 135P may be configured to collect a measurement signal MS sensed by the sensing part 135S to generate measurement data. The processor 135P may be connected to the sensing part 135S by wire or wirelessly. The processor 135P may be configured to correct the measurement data by adding an offset measurement amount to each of measured values of the measurement data. Due to the progress of a process and the aging of equipment, the measured values of the measurement data may be different from actual values. The processor 135P may correct the measurement data based on the offset measurement amount to improve the reliability of the secondary battery manufacturing system 100 and a roll map generating method. The offset measurement amount may be determined based on information about an equipment system obtained by a method such as a sample test.

According to example embodiments, the measuring device 135 may be configured to calibrate the coordinate data CD, based on a position of the measuring device 135. More specifically, the measuring device 135 may be configured to calibrate the coordinate data CD based on an offset length OL3 to relate the coordinates of the coordinate data CD with the measured values of the measurement data.

The measuring device 135 may collect measurement data of a part corresponding to (e.g., overlapping) the sensing part 135S and the coordinate data CD is collected by the second encoder 123 spaced apart from the sensing part 135S as described above, and thus, a part of the electrode sheet ES corresponding to the unwinding amount signal UWAS and a part of the electrode sheet ES corresponding to the measurement signal MS at the same time may be different from each other.

According to example embodiments, in order to provide coordinate-related measurement data CMD, the processor 135P may calibrate the coordinate data CD, which is collected at the same time as the measurement data, based on the offset length OL3, and relate the calibrated coordinate data with the measurement data. The measured values of the measurement data may be matched to time, and measured values of the coordinate-related measurement data CMD may be matched to calibrated coordinates. The offset length OL3 is a length of the electrode sheet ES between the sensing part 135S and the rewinder 113 according to a moving path of the electrode sheet ES. The offset length OL3 may be equal to or greater than a straight line distance between the sensing part 135S and the rewinder 113.

The processor 135P may be configured to collect evaluation data, based on the measurement data. The processor 135P may be configured to collect evaluation data, based on the measurement data.

For example, a measured value (or an average) that is in a first range may be determined as normal, a measured value (or an average) that is in a second range greater than the first range may be determined as excessive, a measured value (or an average) that is in a third range greater than the second range may be determined as very excessive, a measured value (or an average) that is in a fourth range less than the first range may be determined as insufficient, and a measured value (or an average) that is in a fifth range less than the fourth range may be determined as very insufficient.

Here, when a lower limit of the second range is greater than or equal to an upper limit of the first range, the second range is greater than the first range. Similarly, when an upper limit of the fourth range is less than or equal to a lower limit of the first range, the fourth range is less than the first range.

The inspector 137 may be configured to inspect the electrode sheet ES to collect inspection data of the electrode sheet ES. The inspector 137 may include a sensing part 137S and a processor 137P. The sensing part 137S may be configured to sense a physical quantity of the electrode sheet ES to generate an inspection signal IS. The sensing part 137S may be configured to detect defects such as a surface defect of the electrode sheet ES, based on a change in a color of a surface of the electrode sheet ES, a change in reflectivity, etc.

The processor 137P may be configured to collect the inspection signal IS sensed by the sensing part 137S to generate inspection data. The processor 137P may be connected to the sensing part 137S by wire or wirelessly.

According to example embodiments, the inspector 137 may be configured to calibrate the coordinate data CD, based on a position of the inspector 137. More specifically, the inspector 137 may be configured to calibrate the coordinate data CD based on an offset length OD4 to relate the coordinates of the coordinate data CD with inspection values of the inspection data.

The inspector 137 may collect inspection data of a part corresponding to (e.g., overlapping) the sensing part 137S and the coordinate data CD is collected by the second encoder 123 spaced apart from the sensing part 137S as described above, and thus, a part of the electrode sheet ES corresponding to the unwinding amount signal UWAS and a part of the electrode sheet ES corresponding to the inspection signal IS at the same time may be different from each other.

According to example embodiments, in order to collect coordinate-related inspection data CID, the processor 137P may calibrate the coordinate data CD, which is collected at the same time as the inspection data, based on the offset length OL4, and relate the calibrated coordinate data CD with the inspection data. The inspection values of the inspection data may be matched to time, and inspection values of the coordinate-related inspection data CID may be matched to calibrated coordinates. The offset length OL4 is a length of the electrode sheet ES between the sensing part 137S and the rewinder 113 according to a moving path of the electrode sheet ES. The offset length OL4 may be equal to or greater than a straight line distance between the sensing part 137S and the rewinder 113.

The inspection data collected by the inspector 137 may include a result of judging the quality of a part of the electrode sheet ES and a process event. For example, the inspection data may include data about the appearance of the electrode sheet ES collected by an image-based inspection device such as a vision machine, size data, such as a thickness and a width, of the electrode sheet ES, data of a width of an insulating material on the coating material, data of an overlapping width between the coating material and the insulating material, mismatching data between coated lanes on an upper surface of the electrode sheet ES and coated lanes on a lower surface of the electrode sheet ES, data about disconnections and joints of the electrode sheet ES, data about a part of the electrode sheet ES on which a sampling inspection is performed, data about a part of the electrode sheet ES to be scrapped, data about a scrapped part of the electrode sheet ES, data about whether the coating material and the insulating material on the electrode sheet ES are defective or not, data about datum points for marking a position on the electrode sheet ES, and data about defects such as a pinhole defect, a crater defect, a line defect, a crack defect, a side ring defect, an island defect, a fold defect, a wrinkle defect, a pit defect, and a scratch defect. The datum points may be formed on the electrode sheet ES at certain intervals, and other elements on the electrode sheet ES may be located based on the datum points. The inspector 137 may be a color sensor, a joint sensor, a datum point sensor, or a vision machine.

The measurement data and the inspection data described above may be time series data. The measurement data and the inspection data may be temporally ordered. Temporal ordering is a main feature of time series data and should be understood as organizing events in an order in which they occur and arrive to be processed. That is, the measurement data and the inspection data ID may be stored based on points in time when measurement and inspection are performed and may be related to time. Accordingly, each of measured values of the measurement data may be matched to time, and each of inspection values of the inspection data may be matched to time.

For example, data of measurement amounts (e.g., an amount of loading on the electrode sheet ES or a thickness of the electrode sheet ES) may include a series of measurement values (e.g., amounts of loading on the electrode sheet ES or thicknesses of the electrode sheet ES) and time values related to the series of measurement values. The measured values and the time values may be matched in a one-to-one manner but are not limited thereto. As another example, defect data may include a value indicating a defect and a time value related to the value indicating the defect. Here, the value indicating the defect should be understood to mean that the value includes information regarding at least one of the presence of the defect or the type of the defect.

The controller 141 may be in operative communication with the first and second encoders 121 and 123, the measuring device 135, and additional measuring devices and inspectors through a wired or wireless data network. The data network may be unidirectional or bidirectional. The data network may be implemented by a physical channel, WiFi, public networks and/or specialized networks using Bluetooth or other frequency bands. The first and second encoders 121 and 123, the first sensor 131, the second sensor 133, the measuring device 135 and the inspector 137 may be configured to collect data from equipment, a workpiece, an intermediate product, and a product in the secondary battery manufacturing system 100 or to generate a signal for collecting data therefrom.

The controller 141 may be configured to transmit the coordinate data CD to the processors 135P and 137P. The processor 135P may be configured to relate the coordinate data CD with the measurement data to generate the coordinate-related measurement data CMD. The processor 137P may be configured to connect the coordinate data CD with the measurement data to generate the coordinate-related inspection data CID.

The NG mark sensing data MSD, the NG tag sensing data TSD, scrap data SD, the coordinate data CD, the coordinate-related measurement data CMD, and the coordinate-related inspection data CID that are transmitted to the controller 143 may be transmitted to the first server 150 through the controller 143 and the server 145. The controller 143 and the server 145 may relay communication of data, including the NG mark sensing data MSD, the NG tag sensing data TSD, the scrap data SD, the coordinate data CD, the coordinate-related measurement data CMD, and the coordinate-related inspection data CID, between the the first server 150 and the controller 141. However, embodiments are not limited thereto, and the controller 141 may directly transmit the NG mark sensing data MSD, the NG tag sensing data TSD, the scrap data SD, the coordinate data CD, the coordinate-related measurement data CMD, and the coordinate-related inspection data CID to the server 150.

The controllers 141 and 143may be programmable logic controllers (PLCs). A PLC is a special type of microprocessor-based controller that stores instructions using a programmable memory and implements functions such as logic, sequencing, timing, counting and arithmetic operations to control machines and processes. It is easy to operate and program the PLC.

The controllers 141 and 143 may include a power supply, a CPU, an input interface, an output interface, a communication interface, and memory devices. The power supply may be configured to supply power to the other components of the controllers 141 and 143, such as the CPU, the input interface, the output interface, the communication interface, and the memory devices, to operate the controllers 141 and 143. The memory devices may include a read only memory (ROM) configured to store system programs such as operating systems, and a random access memory (RAM) configured to store data such as user programs, state information of input and output devices, and values of a timer, a counter, and other internal devices. The CPU may be configured to implement logic and control communication between modules that convert an input signal into an output operation signal. The CPU may operate based on a system program and a user program stored in the memory devices. The CPU may be configured to write or read inspection data and measurement data to or from data areas of the memory devices, based on the system program and the user program. Conditions or data of industrial devices and production processes may be transmitted to the CPU through an input module. A result of processing performed by the CPU may be transmitted to an actuator through an output module. The power supply may be configured to supply power to the other components of the controllers 141 and 143, such as the CPU, the input interface, the output interface, the communication interface, and the memory devices, to operate the controllers 141 and 143.

However, embodiments are not limited thereto, and the controllers 141 and 143 may each include one of a simple controller, a complex processor such as a microprocessor, a CPU or a GPU, a processor configured by software, dedicated hardware, and firmware. The controllers 141 and 143 may be implemented, for example, by a general-purpose computer or application-specific hardware such as a digital signal process (DSP), a field-programmable gate array (FPGA) or an application-specific integrated circuit (ASIC).

For control of a process, a communication line may be installed between the controller 143 and the server 150 to connect the controller 143 and the server 150 via the server 145 . Accordingly, data transmission through the controller 143 may reduce resources required for the installation of the communication line and ensure efficient data processing and management, compared to a case in which the first and second encoders 121 and 123 and the measuring device 135 directly transmit an input amount signal UWS, the winding signal WAS, and the measurement signal MS to the server 150 and a case in which the controller 141 directly transmits the coordinate-related measurement data CMD and evaluation data ED to the server 150.

According to example embodiments, the server 145 may be a communication server. The server 145 may be a device for communication between the controller 143 and the server 150. Accordingly, data of process events occurring in the secondary battery manufacturing system 100 may be transmitted to the server 150.

The server 145 may be configured to convert data (e.g., electrode specification data) transmitted from the server 150 into a language of the second controller 143. In addition, the server 145 may be configured to convert the exhaustion amount data UWAD, the good-quality-product amount data UWAD, the NG mark sensing data MSD, the NG tag sensing data TSD, the defect position data DPD, the scrap data SD, the coordinate-related measurement data CMD and the coordinate-related inspection data CID into the language of the server 150, and record them in a database of the server 150.

The server 150 may be configured to generate a roll map including data of process events. Roll maps may be produced in units of lots. The roll map may include data about specifications of a lot. The specifications of the lot may include, for example, a lot number, a length of the wound electrode sheet ES, a width of the electrode sheet ES, and materials and a composition used to process the electrode sheet ES. The server 150 may be configured to generate roll maps including data of process events. The data of the process events of the roll maps may include values indicating the process events and coordinates matching the values. The coordinates may represent positions on the electrode sheet. Accordingly, the roll maps enable feedback, feedforward, and tracking of a secondary battery manufacturing process as described below.

The server 150 may be configured to generate a hold command HCD based on the NG mark sensing data MSD, the NG tag sensing data TSD, the defect position data DPD, and the scrap data SD. The server 150 may be configured to generate the hold command HCD when a length of one of the NG mark sensing data MSD, the NG tag sensing data TSD, the defect position data DPD is greater than a length of a scrapped part of the electrode sheet ES in the scrap data SD. The hold command HCD may be transmitted to the controller 143 via the server 145. The controller 143 may stop the operations of the unwinder 111 and the rewinder 113, based on the hold command HCD and thereafter a remaining defect of the electrode sheet ES may be further removed.

According to example embodiments, the server 150 may be configured to determine an inter-process loss of the first electrode roll ER1, based on the exhaustion amount data UWAD. The inter-process loss is a loss of a part of the first electrode roll ER1 between the completion of a previous process of providing the first electrode roll ER1 and the input of the first electrode roll ER1 to a current process (i.e., before the input of the first electrode roll ER1 to the current process after the completion of the previous process). The inter-process loss may involve the scrapping of an outermost part of the first electrode roll ER1 completed in a previous process (e.g., the coating process), and sample inspection. In general, when a defect that does not meet a scrap criterion is on the outermost part of the first electrode roll ER1, the outermost part of the first electrode roll ER1 may be scrapped by an operator for continuity of the process. The end part of the first electrode roll ER1 may be removed for sample inspection, and the sample inspection may include, for example, investigating chemical and physical properties of the first electrode roll ER1.

For example, when an inter-process loss of the first electrode roll ER1 is not zero, the server 150 may determine that, processing, for example, sample collection or defect removal, has been performed on the first electrode roll ER1 between the completion of the previous process and the input of the first electrode roll ER1 to the current process (i.e., before the input of the first electrode roll ER1 to the current process after the completion of the previous process). Accordingly, a decrease in matching of production performance of intermediate products, such as the first electrode roll ER1, the electrode sheet ES and the second electrode roll ER2, may be prevented by an operator's intervention essential between a preceding process and a subsequent process.

The inter-process loss may be calculated based on Equation 1 below.

[Equation 1]

$$\text{exhaustion amount} = \text{input amount} - \text{inter-process loss}$$

In Equation 1, the input amount may be an amount of a good-quality product (i.e., an amount of the first electrode roll ER1 that is a good-quality product) in the previous process, and the exhaustion amount may be an amount of the electrode sheet ES unwound from the first electrode roll ER1 by the unwinder 111. The exhaustion amount may be determined based on the exhaustion amount data UWAD.

For example, when an amount of a finished good-quality product in the previous process is 2000 m and the input amount is 1995 m, the server 150 may be configured to determine that a part of the first electrode roll ER1, which is 5 meters long, has an inter-process loss. Accordingly, the traceability of the occurrence and cause of the inter-process loss may improve and the reliability of the manufacture of a secondary battery may improve.

Input amount data and the exhaustion amount data UWAD may be recorded and stored in the database of the server 150. Accordingly, the server 150 may be configured to determine an exhaustion amount, an input amount, and an inter-process loss.

According to example embodiments, the server 150 may be a data processing system that supports all activities required to manage the manufacture of a secondary battery, such as work schedule management, work instructions, quality control, and work performance aggregation. The server 150 may be, for example, a manufacturing execution system (MES). The server 150 may be configured to perform inputting, processing, outputting, and communication of data necessary for the manufacture of electrodes, including the coating process, a press process, and a slitting process.

According to other example embodiments, the server 150 may be configured to store and process raw measurement data. The server 150 may manage the quality of processing the electrode sheet ES by continuously monitoring the processing of the electrode sheet ES based on the inspection data. According to example embodiments, the server 150 may be a statical process controller (SPC). The server 150 may collect and analyze manufacturing data in almost real time to identify problematic conditions in a timely manner and provide a notification to an operator before potential problems occur.

According to other example embodiments, the server 150 may be, for example, a data warehouse and be configured to store the NG mark sensing data MSD, the NG tag sensing data TSD, the scrap data SD, the coordinate data CD, the coordinate-related measurement data CMD, adn the coordinate-related inspection data CID for a long time, based on a quality assurance period of a product and the like.

According to other example embodiments, in order to create a roll map, the server 150 may be provided separately from an MES, an SPC, and a data warehouse.

The processors 135P and 137P and the servers 145 and 150 may be implemented by hardware, firmware, software, or a combination thereof. For example, the processors 135P and 137P and the servers 145 and 150 may include a computing device such as a workstation computer, a desktop computer, a laptop computer, and a tablet computer. The processors 135P and 137P and the servers 145 and 150 may include a simple controller, a complex processor such as a microprocessor, a CPU, or a GPU, a processor configured by software, dedicated hardware, or firmware. The processors 135P and 137P and the servers 145 and 150 may be implemented, for example, by a general-purpose computer or application-specific hardware such as a digital signal processor (DSP), a field programmable gate array (FPGA), or an application specific integrated circuit (ASIC).

The server 150 may include a physical server or a cloud server. The server 150 may provide data and an analysis result to an operator through various frameworks. A framework may include a protocol supporting data transmission so that the client device 160 may visualize data through a user interface and provide updated visualization when new data is calculated by the server 150. The protocol supporting data transmission may include HTML, JavaScript, and/or JSON.

The server 150 may include various types of application programming interfaces (APIs) for storing data in a database and other data management tools. The APIs may also be used to retrieve data from databases of various data management systems. The data management systems may be configured to provide access to a database, pull or retrieve data from the database, and generate metrics. Here, the metrics are a tool for visualizing data. The metrics may include measured values generated in a time-series manner and be used to monitor applications and generate a status warning.

The secondary battery manufacturing system 100 may implement a plug-in architecture with an API for obtaining data to provide a plug-and-play connection of the measuring device 135 and the inspector 137. Accordingly, resources in a certain process step and a specific site can be easily transferred to a different process and a different site or new resources can be easily introduced into each process step and each site.

A data network between the components of the secondary battery manufacturing system 100 may include various types of communication channels including unidirectional and bidirectional wired and wireless communications. For example, the data network may include an industrial protocol network such as OPC, Modbus, or ProfiNet. The communication channel may be a channel of dedicated conduit communication such as universal serial bus (USB), IEEE 802 (Ethernet), IEEE 1394 (FireWire), or other high-speed data communication standards.

In some embodiments, the secondary battery manufacturing system 100 may further include a manual input system that allows an operator to input manufacturing data. The secondary battery manufacturing system 100 may allow data to be input by an operator with an input tool, and a computer-based input of manufacturing data such as Excel file scraping.

According to some embodiments, the operations of the processors 135P and 137P and the servers 145 and 150 may be implemented by instructions stored in a machine-readable medium that is readable and executable by one or more processors. Here, the machine-readable medium may include an arbitrary apparatus for storing and/or transmitting information in a form readable by a machine (e.g., a computing device). Examples of the machine-readable medium may include a read-only memory (ROM), a random access memory (RAM), a magnetic disk storage medium, an optical storage medium, a flash memory, electrical, optical, acoustic or other types of radio signals (e.g., carrier waves, infrared signals, digital signals, etc.), and other signals.

The processors 135P and 137P and the servers 145 and 150 may be configured by firmware, software, routines, and instructions for performing the above-described operation or a process described below. For example, the processors 135P and 137P and the servers 145 and 150 may be instantiated in a memory.

However, this is for the sake of convenience in explanation, and the above-described operations of the processors 135P and 137P and the servers 145 and 150 may result from computing devices, distributed computing devices, processors, firmware, software, routines, and other devices executing routines, and instructions.

An architecture of the secondary battery manufacturing system 100 configured to generate a roll map may be implemented by adding only the processor 135P, the controller 143, and the servers 145 and 150 which are essential elements in a modern process management system. That is, a system according to example embodiments is capable of using resources of an already-installed manufacturing site and reducing additional capital expenditure. In addition, applying the same architecture as existing manufacturing equipment to newly constructed manufacturing equipment may lead to improvement of the reliability of the manufacture of a secondary battery, sensing/improvement of problematic processes, and effective introduction of new processes.

The client device 160 may be configured to transmit an API request to the server 150 to inquire information about a roll map. The server 150 may be configured to transmit a uniform resource locator (URL) (or a schema) including source code for displaying the roll map on the client device 160 to the client device 160, in response to the API request from the client device 160. The client device 160 may access source code for visualizing and displaying the roll map through the URL (or schema).

The client device 160 may be a device, e.g., a mobile device, such as a workstation computer, a laptop computer, a desktop computer, a tablet PC or a smart phone, or a wearable device, for communication with the server 150. The client device 160 may include input tools for inputting the API request and a display device displaying the roll map.

(Second Embodiment)

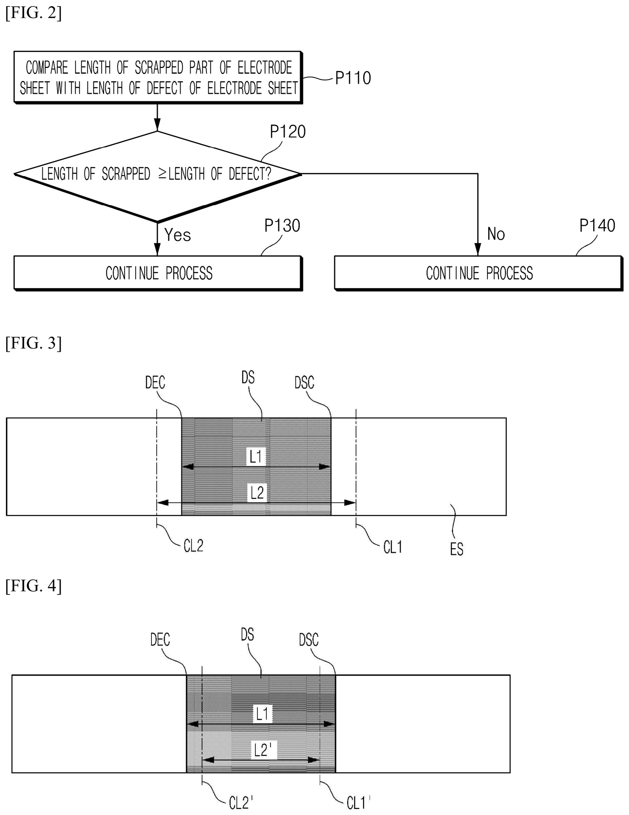

FIG. 2 is a flowchart of a secondary battery manufacturing method according to example embodiments.

FIGS. 3 and 4 illustrate a part of an electrode sheet ES.

Referring to FIGS. 1 to 4, in P110, a length of a scrapped part of the electrode sheet ES may be compared with a length of a defect of the electrode sheet ES. The server 150 may compare the length of the scrapped part of the electrode sheet ES with the length of the defect of the electrode sheet ES, based on the NG mark sensing data MSD, the NG tag sensing data TSD, the defect position data DPD and the scrap data SD.

Next, in P130, as shown in FIG. 3, when a length **L2** of the scrapped part of the electrode sheet ES is greater than or equal to a length L1 of a defect DS of the electrode sheet ES, the defect DS of the electrode sheet ES may be sufficiently scrapped. Cutting lines CL1 and CL2 are boundaries of a scraped part of the electrode sheet ES. Accordingly, in P140, a process may be continued.

In P140, when a length **L2'** of the scrapped part of the electrode sheet ES is less than the length L1 of the defect DS of the electrode sheet ES, the defect DS may remain in the electrode sheet ES. Cutting lines CL1' and CL2' are boundaries of a scrapped part of the electrode sheet ES. Accordingly, in P150, the process may be stopped. The stopping of the process may include generating a hold command HCD by the server 150 and transmitting the hold command HCD to a controller.

(Third Embodiment)

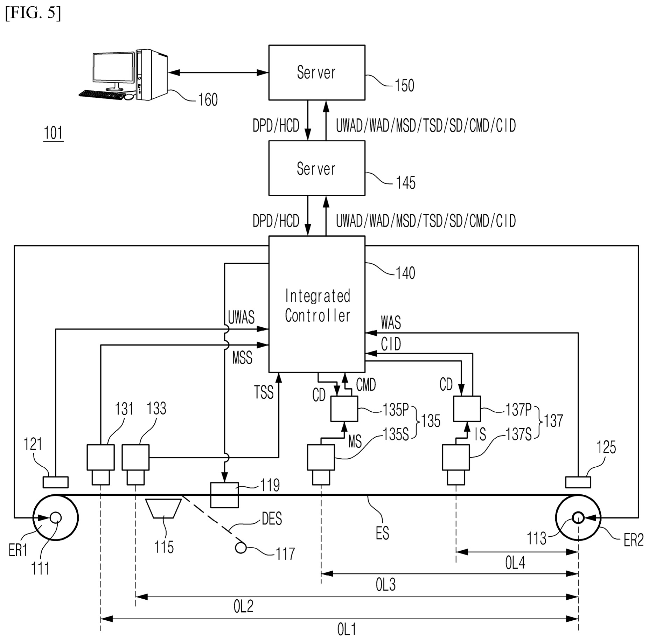

FIG. 5 illustrates a secondary battery manufacturing system 101 according to example embodiments.

Referring to FIG. 1, the secondary battery manufacturing system 101 may include an unwinder 111, a rewinder 113, a splicing table 115, a scrap port 117, a processing device 119, a first encoder 121, a second encoder 123, a first sensor 131, a second sensor 133, a measuring device 135, an inspector 137, an integrated controller 140, a server 145, a server 150, and a client device 160.

The unwinder 111, the rewinder 113, the splicing table 115, the scrap port 117, the processing device 119, the first encoder 121, the second encoder 123, the first sensor 131, the second sensor 133, the measuring device 135, the inspector 137, the server 145, the server 150, and the client device 160 are substantially the same as those described above with reference to FIG. 1, and thus, redundant description thereof is omitted here.

The integrated controller 140 may be configured to perform the functions of the controller 141 and the controller 143 of FIG. 1. Accordingly, the integrated controller 140 may be configured to collect NG mark sensing data MSD, NG tag sensing data TSD, scrap data SD and coordinate data CD, transmit the coordinate data CD to processors 135P and 137P, receive coordinate-related measurement data CMD and coordinate-related inspection data CID from the processors 135P and 137P, and transmit the NG mark sensing data MSD, the NG tag sensing data TSD, the scrap data SD, the coordinate data CD, the coordinate-related measurement data CMD and the coordinate-related inspection data CID to the first server 150 via the server 140. The integrated controller 140 may be configured to generate a signal for controlling the unwinder 111, the rewinder 113, the scrap port 117 and the processing device 119.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

**Claims**

1. A secondary battery manufacturing system comprising:

   a first encoder configured to sense a length of an electrode sheet unwound from a first electrode roll by an unwinder to generate an exhaustion amount signal;
   a first controller configured to collect input amount data of the electrode sheet, based on the exhaustion amount signal; and
   a server configured to store the input amount data.

2. The secondary battery manufacturing system of claim 1, wherein the server is further configured to determine an inter-process loss, based on the input amount data, and
   the inter-process loss comprises a loss of the first electrode roll that occurs after the first electrode is completed and before the first electrode roll is loaded on the unwinder.

3. The secondary battery manufacturing system of claim 2, wherein the inter-process loss comprises a loss due to sample inspection.

4. The secondary battery manufacturing system of claim 2, wherein the inter-process loss comprises a loss due to scrapping of an outermost part of the first electrode roll.

5. The secondary battery manufacturing system of claim 1, further comprising a scrap port configured to scrap a defective part of the electrode sheet unwound from the first electrode roll, and
wherein the first controller is further configured to collect scrap data indicating a length of a part of the electrode sheet that is scrapped by the scrap port.

6. The secondary battery manufacturing system of claim 5, wherein the first controller is further configured to transmit the scrap data to the server.

7. The secondary battery manufacturing system of claim 6, wherein the server is further configured to store a roll map including defect position data indicating a position of a defect on the first electrode roll.

8. The secondary battery manufacturing system of claim 7, further comprising a second controller configured to control the unwinder, and
wherein the server is further configured to transmit the defect position data to the second controller.

9. The secondary battery manufacturing system of claim 8, wherein the server is further configured to compare the defect position data with the scrap data.

10. The secondary battery manufacturing system of claim 9, wherein the server is further configured to transmit a hold command to the second controller, when a length of the defect in the defect position data is greater than a length of the scrapped part of the electrode sheet.

11. The secondary battery manufacturing system of claim 10, wherein the second controller is configured to control the unwinder, based on the hold command.

12. A secondary battery manufacturing method comprising:

collecting scrap data indicating a length of a scrapped part of an electrode sheet; and
comparing the length of the scrapped part of the electrode sheet with a length of a defect of the electrode sheet, wherein the scrap data is collected based on an input amount signal generated by a first encoder configured to sense a length of the electrode sheet unwound from a first electrode roll.

13. The secondary battery manufacturing method of claim 12, further comprising stopping unwinding of the first electrode roll, when the length of the defect is greater than the length of the scrapped part of the electrode sheet.

[FIG. 1]

[FIG. 2]

```
┌─────────────────────────────────────────────────┐
│ COMPARE LENGTH OF SCRAPPED PART OF ELECTRODE     │──── P110
│ SHEET WITH LENGTH OF DEFECT OF ELECTRODE SHEET   │
└─────────────────────────────────────────────────┘
                        │
                        ▼
              ◇ LENGTH OF SCRAPPED ≥LENGTH OF DEFECT? ◇──── P120
                        │                          │
                     Yes│                          │No
                        ▼                          ▼
         ┌──────────────────────┐    ┌──────────────────────┐
         │   CONTINUE PROCESS    │    │   CONTINUE PROCESS    │
         └──────────────────────┘    └──────────────────────┘
              P130                          P140
```

[FIG. 3]

[FIG. 4]

**15**

[FIG. 5]

## INTERNATIONAL SEARCH REPORT

| International application No. |
|---|
| **PCT/KR2024/096244** |

### A. CLASSIFICATION OF SUBJECT MATTER

**H01M 4/04**(2006.01)i; **H01M 10/04**(2006.01)i; **B65H 43/04**(2006.01)i; **B65H 23/182**(2006.01)i; **G05B 19/418**(2006.01)i

According to International Patent Classification (IPC) or to both national classification and IPC

### B. FIELDS SEARCHED

Minimum documentation searched (classification system followed by classification symbols)

H01M 4/04(2006.01); B05C 11/10(2006.01); H01M 10/04(2006.01); H01M 2/10(2006.01); H01M 2/26(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 이차 전지(secondary battery), 언와인더(unwinder), 전극 시트(electrode sheet), 엔코더(encoder), 컨트롤러(controller), 서버(server), 스크랩(scrap), 롤 맵(roll map), 센싱(sensing), 불량(defect)

### C. DOCUMENTS CONSIDERED TO BE RELEVANT

| Category* | Citation of document, with indication, where appropriate, of the relevant passages | Relevant to claim No. |
|---|---|---|
| Y | KR 10-2023-0021479 A (LG ENERGY SOLUTION, LTD.) 14 February 2023 (2023-02-14)<br>See claims 1, 2, 13, 15 and 17; and paragraphs [0005]-[0007], [0032], [0047]-[0050], [0063], [0064], [0082], [0083], [0086]-[0088], [0093], [0105]-[0109], [0131], [0134] and [0135]. | 1-13 |
| Y | KR 10-2023-0137971 A (CONTEMPORARY AMPEREX TECHNOLOGY CO., LIMITED) 05 October 2023 (2023-10-05)<br>See claims 1 and 7; and paragraphs [0142] and [0149]-[0154]. | 1-13 |
| Y | KR 10-2022-0134303 A (LG ENERGY SOLUTION, LTD.) 05 October 2022 (2022-10-05)<br>See paragraph [0061]. | 3 |
| A | KR 10-2018-0060679 A (FITO CO., LTD.) 07 June 2018 (2018-06-07)<br>See abstract; and claims 1-8. | 1-13 |
| A | KR 10-2008-0019128 A (LTK INC. LTD.) 03 March 2008 (2008-03-03)<br>See abstract; and claims 1-8. | 1-13 |

☐ Further documents are listed in the continuation of Box C.　　☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **13 January 2025** | **14 January 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

### INTERNATIONAL SEARCH REPORT
**Information on patent family members**

International application No.

**PCT/KR2024/096244**

| Patent document cited in search report | | | Publication date (day/month/year) | Patent family member(s) | | | Publication date (day/month/year) |
|---|---|---|---|---|---|---|---|
| KR | 10-2023-0021479 | A | 14 February 2023 | KR | 10-2615413 | B1 | 19 December 2023 |
| | | | | US | 2023-0109490 | A1 | 06 April 2023 |
| | | | | US | 2024-0402261 | A1 | 05 December 2024 |
| KR | 10-2023-0137971 | A | 05 October 2023 | CN | 117136454 | A | 28 November 2023 |
| | | | | EP | 4287340 | A1 | 06 December 2023 |
| | | | | EP | 4287340 | A4 | 03 July 2024 |
| | | | | JP | 2024-507396 | A | 19 February 2024 |
| | | | | US | 2023-411583 | A1 | 21 December 2023 |
| | | | | WO | 2023-097673 | A1 | 08 June 2023 |
| KR | 10-2022-0134303 | A | 05 October 2022 | CN | 115917776 | A | 04 April 2023 |
| | | | | EP | 4156317 | A1 | 29 March 2023 |
| | | | | EP | 4156317 | A4 | 29 May 2024 |
| | | | | KR | 10-2623933 | B1 | 11 January 2024 |
| | | | | US | 2023-0251752 | A1 | 10 August 2023 |
| | | | | US | 2024-0402867 | A1 | 05 December 2024 |
| | | | | WO | 2022-203252 | A1 | 29 September 2022 |
| KR | 10-2018-0060679 | A | 07 June 2018 | CN | 108172908 | A | 15 June 2018 |
| | | | | JP | 2018-088411 | A | 07 June 2018 |
| | | | | KR | 10-1899990 | B1 | 18 September 2018 |
| KR | 10-2008-0019128 | A | 03 March 2008 | KR | 10-0824808 | B1 | 24 April 2008 |

Form PCT/ISA/210 (patent family annex) (July 2022)

**REFERENCES CITED IN THE DESCRIPTION**

**Patent documents cited in the description**

- KR 1020230137548